# EUROPEAN PATENT APPLICATION

(11) **EP 4 339 013 A1**
(43) Date of publication of application: **20.03.2024**
(21) Application number: 23197752.1
(22) Date of filing: 15.09.2023
(51) Int. Cl.: B60L 53/16, B60L 53/18

(54) **CHARGING CORD, IN PARTICULAR FOR ELECTRIC VEHICLES, AND COMMUNICATION METHOD AND COMPUTER PRODUCT**

(30) Priority: 16.09.2022 PL 44230822
(71) Applicant: CSG Spolka Akcyjna, 30-509 Krakow (PL)
(72) Inventor: Motyka, Lukasz, 33-332 Florynka (PL); Jawor, Konrad, 30-826 Krakow (PL); Gebarowski, Witold, 30-128 Krakow (PL)
(74) Representative: JWP Patent & Trademark Attorneys

(57) **Abstract**

The subject-matter of the invention is a charging cord, in particular for electric vehicles, and a communication method and a computer product. The charging cord, in particular for electric vehicles, comprises energy supply wires (3), at least one communication wire (4), a charging plug (6), an energy supply plug (5), and a control system comprising a communication module (2) and a power module (1). The communication module (2) is arranged in a housing (19) of the charging plug (6), the charging plug (6) comprising energy supply contacts and communication contacts. The communication module (2) is connected to the communication contacts in the charging plug (6) and via the communication wire (4) to the power module (1). The power module (1) is arranged in a housing (15) of the energy supply plug (5), the energy supply plug (5) comprising energy supply contacts. The power module (1) is connected via energy supply wires (3) to the energy supply contacts in the energy supply plug (5), and to the energy supply contacts in the charging plug (6), wherein the power module (1) also comprises energy supply circuits that comprise keys to open or close the energy supply circuits. The method of communication is that the communication module (2) controls the communication by using a communication frame. The communication module (2) transmits the communication frame via the communication wire (4) to the power module (1). A part of the communication frame are time windows within which the communication module (2) transmits information to the power module (1) and time windows within which it expects or receives a response from the power module (1).

## Description

The subject-matter of the invention is a charging cord, in particular for electric vehicles, and a communication method and a computer product. The device provides electrical connection between the electric vehicle and the alternating current (AC) multi-phase socket in the form of a cord that at the same time monitors the parameters of the current and voltage delivered by the cord. The device and method can be basically used to control and provide security to the charging process, in particular of an electric vehicle.

The charging cord delivers alternating current to the device being charged. The current drawn is regulated by the device being charged. A typical stationary charger is designed, on the one hand, to deliver an adequate electrical current in a safe way, and on the other hand, to enable payments for the power drawn from the network. In simpler solutions, i.e. the ones for homes, just delivering the current is sufficient, but users are interested in the convenience of use and additional information about the charging process.

Patent document PL/EP3453559 is known that discloses a charging cable and an adapter for electrically charging an energy storage device on an energy supply unit. The charging cable, in particular for electric charging of an electric vehicle, has a charging wire, which, on the one hand, is detachably electrically connected using a connection device to the energy storage device to be charged, and, on the other hand, is electrically connected to an adapter interface, which can be detachably connected in a positive-locking manner to an adapter, the adapter being detachably electrically connectable to an energy supply device, in order to transfer electrical energy from the energy supply device via the charging cable to the energy storage device to be charged. In order to obtain a particularly compact and durable charging cable, according to the invention, it is provided that the adapter interface has a communication set which allows a wireless communication with the adapter having an appropriate communication device when the adapter is connected to the adapter interface, so that control signals between the energy supply device, on the one hand, and an electronics of the charging cable and/or an energy storage device which is connected to the charging cable, on the other hand, can be wirelessly transferred between the adapter and the adapter interface.

Further, the document relates to a method for electrically charging an energy storage device on an energy supply device, with the charging device consisting of a charging cable, which, on the one hand, is detachably electrically connected using a connection device to the energy storage device being charged and, on the other hand, detachably electrically connected to the energy supply device via an adapter, which is detachably connected in a positive-locking manner to an adapter interface.

The disadvantage of this solution is that wireless communication is susceptible to interference, and this may have an impact on the safety of using the charging cable. Wireless communication in the immediate vicinity of high alternating currents may be subject to serious interference. According to the regulations for the devices of this type, communication must take place without interference and at an appropriate speed so as to ensure a quick response time in the event of a malfunction. The requirements as far as delayed responses of a device are concerned are laid down in EN 62752 in connection with EN 61851-1, which specify that a device used to connect energy supply to an electric vehicle must be able to disconnect energy supply within 100 ms from that being requested by the electric vehicle.

Charging cords are known, comprising a multiphase plug at one end and a vehicle charging plug at the other end. Most often, such devices comprise a box with electronics that is arranged on the cord between its ends. Such a solution makes it possible to charge a vehicle from any multiphase socket but such a solution is vulnerable to damage and may pose additional risks to the user. The box with electronics, if not attached to a wall, may end up near the wheels of the vehicle and become damaged by these, for example by being run over. Additionally, damage to the cable between the multiphase plug and the box with electronics is another source of hazards for the user.

International application document WO22048895 discloses a charging plug, a charging device and a charging method for an electric vehicle. The charging plug according to the document for charging an accumulator of an electric vehicle comprises a consumer-side connection for connecting the charging plug to a connection of the electric vehicle and an actuating element for initiating at least one function which is assigned to the charging operation. The actuating element can be assigned the at least one function, which can be selected from a plurality of selectable functions, by the operator.

The above-cited document cites another application document DE102012021502, which discloses a device for providing electrical connection between, e.g., an electric vehicle and, e.g., a single-phase or three-phase alternating current (AC) wall socket, having a power supply element in conductive connection to the connector. The device has a connector that is configured to provide electrical connection to an electrically driven mobile unit. The power element is electrically conductively connected by a connection line to the connector. The connector is equipped with an operating element and an optical display element. The connector comprises a lighting element that is located in the direction before the electrical connection ends. The control line having a first control unit and a second control unit of the power element is connected to the connector for signal transmission.

The disadvantage of both cited solutions is the need for communication between the actuating element and the charging control device or between control units in the immediate vicinity of high current wires and the solutions do not disclose how an interference-free communication was ensured.

The invention solves the problem of ensuring fast and reliable wired communication between individual modules of the invention in the immediate vicinity of energy supply wires in which high current flows. Another technical problem is solved by the invention by the provision of an ergonomic charging cord with increased resistance to damage, and thus a charging cord which is safer to use, and by the provision of additional functionalities in the connection plug.

The charging cord of the invention, in particular for electric vehicles, comprises energy supply wires, at least one communication wire, a charging plug, an energy supply plug, and a control system comprising a communication module and a power module. The essence of the charging cord is that the communication module is arranged in the housing of the charging plug, the charging plug comprising energy supply contacts and communication contacts, and the power module is arranged in the housing of the energy supply plug, the energy supply plug comprising energy supply contacts. The communication module is connected to the communication contacts in the charging plug and via the communication wire to the power module. The wired connection of the communication module and the power module provides higher speed and security of the transmission than wireless transmission, the latter being vulnerable to interference from a high alternating current.

The communication module is responsible for communication with the vehicle being charged, by generating and analysing the CP (Control Pilot) signal, which is delivered to the communication module via the communication contacts in the charging plug. The CP signal is standardised and its parameters are described in EN61851-1 Annex A. The communication module generates a signal of a square waveform with an amplitude of ±12 V (voltage relative to the protective wire) and a frequency of 1 kHz. The positive pulse-width modulation (PWM) of this signal determines the current efficiency of the charging cord. The energy storage being charged, in particular of an electric vehicle, influences the CP signal by that resistance is connected and the amplitude of the signal is changed. When measuring the change in the CP signal amplitude value, the communication module communicates, via communication contacts (in the charging plug) and then via the communication wire, with the power module to instruct to open or close energy supply circuits.

The power module, also referred to as a working module, is further connected via energy supply wires to the energy supply contacts in the energy supply plug, and to the contacts in the charging plug, wherein the power module also includes energy supply circuits that comprise keys to open or close the energy supply circuits. The energy supply circuits in the power module are to interrupt the current path between the energy supply contacts in the energy supply plug and the energy supply wires after charging is complete or in the event of a failure and thereby ensure safer use of the device. The at least one communication wire forms, together with one of the energy supply wires, a communication circuit between the communication module and the power module (working module).

It is preferred that each of the communication module and the power module comprises at least one communication system to which the communication wire is connected and each of the communication systems comprises input and output circuits. Preferably, the input and output circuits of the communication systems are made in an open-drain type system. Preferably, the communication system in the communication module or in the power module comprises Schmitt gates in the input circuits. Preferably, the high state voltage of the communication system is from 10 to 12 V. Preferably, the change of the state of the communication system from low state to high state is not faster than 10 µs. This provides greater resistance to mutual interference propagating between the energy supply and communication wires.

It is preferred that the communication wire is at least a single-core wire and one of the conductors of the at least a single-core communication wire is an auxiliary energy supply wire for delivering auxiliary energy supply from the power module to the communication module. Preferably, the return wire for the auxiliary energy supply circuit or the communication circuit is at least one of the energy supply wires. Preferably, the power module comprises an auxiliary energy supply system connected via the auxiliary energy supply wire to the communication module for delivering auxiliary energy supply.

The power module, in addition to controlling the keys opening or closing the energy supply circuits (when instructed by the communication module) and measuring the parameters of the energy supply lines, also processes energy supply for the communication module. It uses a switching converter for this and lowers the voltage to safe values and creates a galvanic isolation barrier.

It is preferred that the communication module comprises a communication microcontroller that comprises a waiting time meter and the power module comprises a control microcontroller.

It is preferred that the power module comprises measuring circuits for reading, for each energy supply wire, at least one of: energy supply current, energy supply voltage, temperature, leakage current.

It is preferred that at least one control button is arranged in the housing of the charging plug and preferably a display is arranged in the housing of the charging plug.

It is preferred that the communication module comprises a wireless communication system for communication with the user.

The essence of the communication method between the communication module and the power module of the charging cord of the invention is that the communication module controls the communication by using a communication frame. The communication module transmits the communication frame via the communication wire to the power module.

The concept of a communication frame is associated with the concept of a device status, which defines the operating status of the power module. There are several device statuses:
- status of correct operation - only in this state the energy storage of a vehicle can be charged, because no irregularities in the device, network parameters or communication with the vehicle being charged have been detected;
- status of leakage current detected - the power module has detected a leakage current, wherein the leakage current is the current that flows between the energy supply lines and the protective cord, or the power module has not been able to check whether the operation of the detection circuit for this current is correct (the so-called auto-test);
- status of a too high temperature - the power module has detected overheating of components inside the energy supply plug;
- failure status of the keys opening or closing the energy supply circuits.

As the communication between the power module and the communication module needs to be reliable and fast, two types of communication frames have been introduced. One of them makes it possible for the status of the power module to be read quickly, and the other makes it possible for many parameters of the charging process, i.e. data (e.g. voltage, charging current or temperature of the power module), to be read.

A part of the communication frame are time windows within which the communication module transmits information to the power module and time windows within which it expects or receives a response from the power module, where the communication frame comprises periodically:
a) transmitting, by the communication module to the power module via the communication cord, an instruction to send data within the communication frame,
b) receiving, by the power module, the communication frame with an instruction to send data,
c) transmitting, by the power module, within a specified time window in the communication frame, a response that comprises data via the communication cord,
d) receiving data, by the communication module, from the power module,
e) decoding data by the communication module,
f) confirming, by the communication module, that the data from the power module have been received correctly by means of confirmation (F29), and in the absence of confirmation (F29),
g) retransmitting data, by the power module, within a subsequent time window in a subsequent communication frame.

It is preferred that the communication frame is renewed with a period of 200 ms. This period changes only as a result of the device operation being stopped in the charging mode, when the command to stop charging is transmitted.

It is preferred that after step d), if no data are sent from the power module to the communication module within a predefined time, the communication error counter is reduced, said counter being initialised with a predefined value of permissible detected transmission errors at system start-up, wherein if the communication error counter is equal to 0, communication with the energy storage being loaded is interrupted by the communication module and an error message is signalled, otherwise, if the error counter is greater than 0, it is returned to the first step of transmitting the communication frame.

It is preferred that the stoppage of device operation in the charging mode is communicated by the communication module with the command to stop charging, wherein if any communication frame is sent at that time, it is immediately interrupted and the command to stop charging is transmitted, said command being at least five times shorter than the communication frame.

It is preferred that the command to stop charging, as received by the power module, causes the energy supply circuits to open immediately and preferably the power module opens the energy supply circuits when it does not detect the communication frame.

It is preferred that the communication frame comprises a checksum.

It is preferred that the communication module and the power module detect each other's presence and correct operation by performing, before step a) and within each communication frame, the steps below:
a1) transmitting, by the communication module, an instruction to read the status of the power module,
a2) within the time window in each communication frame, transmitting, by the power module, a response with information about the status of the power module,
a3) if the response with information about the status of the power module has been received, transmitting a confirmation (C6) that the status has been received, or otherwise reducing the status waiting time meter, wherein in the event the time for receiving the response with information about the status from the power module is exceeded, i.e. when the status waiting time meter is equal to 0, the communication error counter value is reduced, wherein the communication error counter is initialised with a predefined number of permissible detected transmission errors, when the error counter is greater than zero, it is returned to step a1), and when the error counter is equal to 0, the communication with the energy storage being loaded is interrupted by the communication module and the error message is signalled,
a4) decoding information about the status of the power module,
a5) resetting the power module by a reset command sent by the communication module, in the event of receiving an incorrect status or of no response within a given time window, wherein the latest state of the waiting time is defined by the waiting time meter, and
a6) if the communication with the power module is not restored, a command to stop charging is transmitted and the communication with the device being charged is blocked by the communication contacts of the charging plug.

At the same time, the power module is protected by a monitoring function that blocks the power module and does not allow the energy supply circuits to be switched on in the absence of communication with the communication module.

The essence of the computer program product executed by the control system comprising the communication module and the power module of the charging cord of the invention is that it performs the steps of the method of the invention. It is understood that part of the steps of the method are performed only by the communication module, and the remaining part only by the power module, which allows them to communicate with each other.

When functionalities of the prior-art charging cords were developed, technical problems were generated that were not trivial. Large distances between the communication module and the power module and arranging these modules right next to the wires through which high current flows, cause interference on the communication lines, which makes it impossible to maintain stable communication. The conclusions of the conducted research indicate that using prior-art communication protocols it is impossible to meet the requirements of electromagnetic emission and reliability. The solution significantly improves the functionality of prior-art devices and improves the reliability of the device operation with no harm to electromagnetic emission results. The solution guarantees communication stability and ensures that the device is safe and meets the requirements of directives and standards.

Advantages of the invention are increased ergonomics, a display now being possible to be used in the vehicle-side connection plug and communication being enabled via one line of the communication cable between the split components (modules) of the device.

Other advantages of the invention include control of the charger, ergonomics of use, limitation of interference, weight distribution, reduction of the risk of damage to the device, increasing the number of measured parameters, reducing the distance of the communication protocol (CP) signal generation system from the vehicle. These advantages are briefly discussed below.

With the electronics split into two parts, it is possible to add the functionality of interrupting the charging with the control button present in the vehicle-side connection plug and to use a display informing the user about the ongoing charging process and the status of the device.

Splitting the electronics into two plugs and the introduction of communication between them also affects ergonomics. The communication module arranged in the vehicle-side connection plug allows the user to naturally interact with the device. The power module, transferred to a three-phase plug in the connection plug to the source of energy supply, comprises high-power components (energy supply circuits) that generate heat during operation of the device.

Arranging the power electronics in the connection plug to the source of energy supply prevents electromagnetic interference from moving along the long cable, which can cause interference to the operation of other devices in the vicinity. This also protects the radio modules present in the vehicle-side connection plug, providing them with better working conditions.

With the modules in both plugs enabled to communicate, it was possible to optimally distribute the components and consequently to appropriately distribute weight between both plugs, thus ensuring high ergonomics of use of the device, and it was possible to reduce the thickness of the housing while maintaining the level of safety.

Splitting the electronics into the two plugs and removing the housing with the electronics in the middle of the wire makes it possible to minimise the risk of damage, for example by the vehicle running over the device lying on the ground. In a solution of the invention, during charging, the entire electronics are plugged into the vehicle and into the energy supply socket, and so at a safe distance from the wheels.

Splitting the electronics and use of two microcontrollers made it possible to allocate one of them for measuring the parameters of the power network and charging. With that, more parameters are collected and updated faster. This enables a quicker response to changing conditions and allows the user to collect more accurate parameters of the charging session.

Arranging the communication module in the vehicle-side connection plug shortened the path of the CP signal (communication with the vehicle) from meters to a dozen or so centimetres. This reduces unwanted capacitance and inductance coming from the long cable that impacts communication with the vehicle and can cause transmission errors.

The subject-matter of the invention in its embodiments is shown in the drawing, wherein Fig. 1 shows an exploded diagram of the charging cord, Fig. 2 shows the fields of the status and data communication frame, Fig. 3 shows a timing diagram of the transmission of the status and data communication frame fields, Fig. 4 shows a block diagram of sending the status and data frame, Fig. 5 shows a block diagram of sending a command to stop charging or reset the power module, Fig. 6 shows the frame fields of the command to stop charging or reset the power module, Fig. 7 shows a timing diagram of the transmission of the stop charging or reset the power module frame fields, Fig. 8 shows a block diagram of the charging cord.

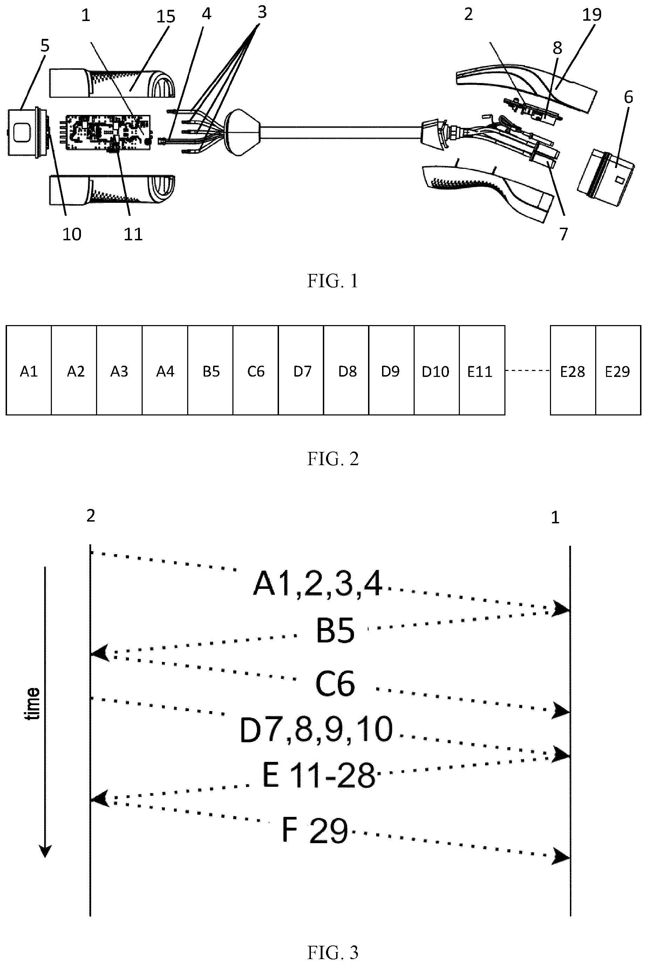

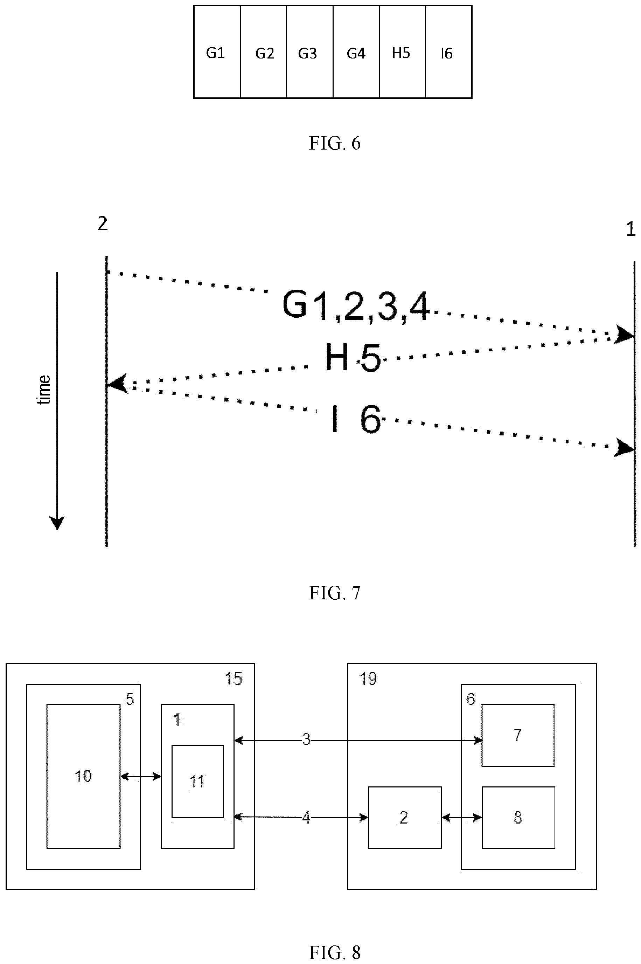

The first embodiment relates to the charging cord of the invention (Fig. 1, Fig. 8). The charging cord, in particular for electric vehicles, comprises energy supply wires 3, at least one communication wire 4, a charging plug 6, an energy supply plug 5, and a control system comprising a communication module 2 and a power module 1.

In an aspect of the first embodiment, the charging cord comprises energy supply wires 3, at least two communication wires 4 (one of which is also an energy supply wire), a charging plug 6, a energy supply plug 5, and a control system comprising a communication module 2 and a power working module 1.

The communication module 2 is arranged in a housing 19 of the charging plug 6, the charging plug 6 comprising energy supply contacts 7 and communication contacts 8. The charging plug is a standardised element in terms of the shape of the plug and the position of individual contacts and, for example, the charging plug is a type 2 plug. The communication module 2 is connected to the communication contacts 8 in the charging plug 6 and via the communication wire 4 to the power module 1.

The power module 1 is arranged in the housing 15 of the energy supply plug 5, the energy supply plug 5 comprising energy supply contacts 10 and the energy supply plug also being standardised - it is, for example, a multiphase (three-phase) plug. The power module 1 is connected via energy supply wires 3 to the energy supply contacts 10 in the energy supply plug 5, and to the energy supply contacts 7 in the charging plug 6, wherein the power module 1 also comprises energy supply circuits 11 that comprise keys to open or close the energy supply circuits 11.

In an aspect of the embodiment, the communication module 2 and the power module 1 comprise communication systems to which the communication wire 4 is connected and each of the communication systems comprises input and output circuits. The high state voltage of the communication system is 12 V. In another aspect of the embodiment, the high state voltage is 10 V. In a particular aspect of the embodiment, when a 12 V energy supply to the communication module is transferred by a constant component of the signal sent via the communication wire, the maximum voltage value at the high state is 24 V, and in yet another aspect of the embodiment it is 22 V. In contrast, the change of the state of the communication system from the low state to the high state is 10 µs, in another aspect of the embodiment it is 12 µs, and in yet another aspect of the embodiment it is 25 µs.

In an aspect of the embodiment, the input and output circuits of the communication systems are made in an open-drain type system. It is obvious to a person skilled in the art that this example is not intended to limit the use of other technologies for making inputs and outputs of communication systems, such as junction field-effect technology, bipolar technology, or hybrid bipolar technology.

In an aspect of the embodiment, the communication system in the communication module 2 or in the power module 1 comprises Schmitt gates in the input and output circuits. It is obvious to a person skilled in the art that this example is not intended to limit the use of other structures in the input and output circuits as well.

In an aspect of the embodiment, the communication wire 4 is a two-core wire, and one of the conductors of the two-core communication wire 4 is an auxiliary energy supply wire for delivering auxiliary energy supply from the power module 1 to the communication module 2. The second one of the conductors of the two-core communication wire 4 is the actual communication wire that provides connection for single-core communication. In another aspect of the embodiment, the communication wire 4 is a single-core wire, and the single-core communication takes place in the presence of a constant component that is used to supply energy to the communication module 2.

In another aspect of the embodiment, the communication wire 4 is a three-core wire, and one of the conductors of the communication wire 4 is an auxiliary energy supply wire for delivering auxiliary energy supply from the power module 1 to the communication module 2. The second one of the conductors of the three-core communication wire 4 is the actual communication wire that provides connection for single-wire communication. The third of the conductors of the three-core communication wire 4 originally serves to supply energy to the vehicle being charged, and secondly, it is a current return route for the communication and auxiliary energy supply circuits. In another aspect of the embodiment, the communication wire 4 is a two-core wire, and the single-wire communication takes place in the presence of a constant component that is used to supply energy to the communication module 2.

In an aspect of the embodiment, the power module 1 comprises an auxiliary energy supply system connected via an auxiliary energy supply wire to the communication module 2 for delivering auxiliary energy supply, wherein the return wire for the auxiliary energy supply circuit is at least one of the energy supply wires 3.

In an aspect of the embodiment, the communication module 2 comprises a communication microcontroller that comprises a waiting time meter and the power module 1 comprises a control microcontroller. It is obvious to a person skilled in the art that the time meter is a typical built-in feature of any digital system and can be configured to count the waiting time.

In an aspect of the embodiment, the charging plug 6 comprises a display. The display is a user interface for easier operation of the device by the user. It is obvious to a person skilled in the art that the display may be realised by various means, for example, LEDs with a description, a liquid crystal display, OLED, e-ink type display and the like.

In an aspect of the embodiment, the power module 1 comprises measuring circuits for reading, for each energy supply wire 3, at least one of: energy supply current, energy supply voltage, temperature, leakage current. The measurement results are transmitted to the communication module 2 so that the user can manage the charging process and, above all, communicate with the device being charged, for example, an electric vehicle.

In an aspect of the embodiment, the charging plug 6 comprises a control button. The control button can be realised both as a mechanical button and a virtual button realised in combination with a touch screen, and this example is not intended to limit the scope of protection.

In an aspect of the embodiment, the communication module 2 comprises a wireless communication system that makes it possible to further expand the user interface by interacting with external applications running on a server or on a mobile device to provide other services to the user of the charging cord. For example, such a service may be an on-line payment service for charging.

A further embodiment relates to the method of communication between the power module and the communication module of the charging cord specified in the first embodiment (Fig. 1 and Fig. 3). The method comprises controlling the communication through the communication module that transmits a communication frame through the communication wire to the power module. A part of the communication frame are time windows within which the communication module transmits information to the power module and time windows within which it expects or receives a response from the power module, where the communication frame comprises:
a) transmitting, by the communication module 2 to the power module 1 via the communication wire 4, an instruction to send data within the communication frame 100,
b) receiving, by the power module 1, the communication frame 100 with an instruction to send data,
c) transmitting, by the power module 1, within a specified time window in the communication frame 100, a response that comprises data (E11-E28) via the communication wire,
d) receiving data (E11-E28), by the communication module 2, from the power module 1,
e) decoding data (E11-E28) by the communication module 2,
f) confirming, by the communication module 2, that the data from the power module 1 have been received correctly by means of confirmation (F29), and in the absence of confirmation (F29),
g) retransmitting data (E11-E28), by the power module 1, within a subsequent time window in a subsequent communication frame 100.

In an aspect of the second example, in step d), if no data are sent from the power module 1 to the communication module 2 within a defined time, the error counter is reduced, said counter being initialised with a permissible value of detected transmission errors at system start-up. The error counter is, for example, a variable in the program or, for example, a register of the communication module 2. If the error counter is equal to 0, the communication with the vehicle energy storage being loaded is interrupted by the communication module 2 and an error message is displayed on the display in the communication module 2. If, on the other hand, the error counter is greater than 0, it is returned to item a) of the method.

In an aspect of the second example, in step e), decoding data, also referred to as parsing data (E11-E28), by the communication module 2, means reading individual data from the communication frame 100, where locations for specific data have previously been defined and the data have been placed in the corresponding variables in the program memory of the communication module 2, e.g., byte E15 comprises the latest voltage value of line L2, which is saved to a variable of the program structure of the communication module 2 and is transferred via the wireless communication interface to the user interface in a remote device.

In an aspect of the second example, in the event of failure to re-transmit data (E11-E28) by the power module 1, in step g), the error counter is reduced. If the error counter is equal to 0, the communication with the vehicle energy storage being loaded is interrupted by the communication module 2 and an error message is displayed on the display in the communication module 2. If, on the other hand, the error counter is greater than 0, it is returned to item a) of the method.

In an aspect of the second embodiment, the communication frame 100 is renewed with a period of 200 ms, this period changing as a result of the device operation being stopped in the charging mode.

In an aspect of the second embodiment, the stoppage of device operation in the charging mode is communicated by the communication module 2 with the command 101 to stop charging (Fig. 6, Fig. 5 and Fig. 7), wherein if any communication frame 100 is sent at that time, it is immediately interrupted and the command 101 to stop charging is transmitted, the command being at least five times shorter than the communication frame 100.

In an aspect of the second embodiment, the command to stop charging received by the power module 1 causes the energy supply circuits 11 to open immediately.

In an aspect of the second embodiment, the power module 1, when it has not detected the communication frame 100, opens the energy supply circuits 11.

In an aspect of the second embodiment, the communication frame 100 comprises a checksum (A4, D10).

In an aspect of the second embodiment the communication module 2 and the power module 1 detect each other's presence and correct operation by performing, before step a) and within each communication frame 100 (Fig. 1 and Fig. 3), the steps below:
a1) transmitting, by the communication module 2, an instruction 102 to read the status of the power module 1,
a2) within the time window in each communication frame 100, transmitting, by the power module 1, a response (B5) with information about the status of the power module 1,
a3) if the response (B5) with information about the status of the power module 1 has been received, transmitting a confirmation (C6) that the status has been received, or otherwise reducing the status waiting time meter, wherein in the event the time for receiving the response with information about the status from the power module 1 is exceeded, i.e. when the status waiting time meter is equal to 0, the communication error counter value is reduced, wherein the communication error counter is initialised with a predefined number of permissible detected transmission errors, when the error counter is greater than zero, it is returned to step a1), and when the error counter is equal to 0, the communication with the energy storage being loaded is interrupted by the communication module 2 and the error message is signalled,
a4) decoding information about the status of the power module 1,
a5) resetting the power module 1 by a reset command 104 sent by the communication module 2, in the event of receiving an incorrect status or of no response within a given time window, wherein the latest state of the waiting time is defined by the waiting time meter, and
a6) if the communication with the power module 1 is not restored, a command 101 to stop charging is transmitted and the communication with the device being charged is blocked by the communication contacts of the charging plug 6,
at the same time, the power module 1 is protected by a monitoring function that blocks the power module 1 and does not allow the energy supply circuits 11 to be switched on in the absence of communication with the communication module 2.

The operation status of the power module 1 is the information about the operation of the power module 1, for example, it is determined based on data from the measurement circuits of the power module 1. This information is sent during the communication between the power module 1 and the communication module 2 as a single byte of data. It describes one of several possible operating states of the power module 1:
- - correct operation;
- - exceeding of the permissible leakage current has been detected;
- - exceeding of the permissible temperature in the power module (1) has been detected;
- - a failure of one or more relays has been detected;
- - a failure of the leakage current sensor has been detected.

The third embodiment relates to a computer product executed by the control system comprising the communication module 2 and the power module 1 of the charging cord of the first embodiment. The computer product carries out the steps of the method of the second embodiment.

Fig. 2 shows a diagram of the fields of the status and data communication frame. The fields in the diagram are: A1 - preamble to the query about the power module status, A2 - designation of the operation type (query about the power module status), A3 - register (identification) number, A4 - checksum, B5 - status field (transmitted by the power module 1, cf. Fig. 3), C6 - confirmation that the status has been received correctly, as transmitted by the communication module 2, D7 - preamble to the query about data from the power module, D8 - designation of the operation type (identification of the type of data requested), D9 - register (identification) number, D10 - checksum, E11-E28 - data fields (transmitted by the power module 1, cf. Fig. 3), F6 - confirmation that the data have been received correctly, as transmitted by the communication module 2.

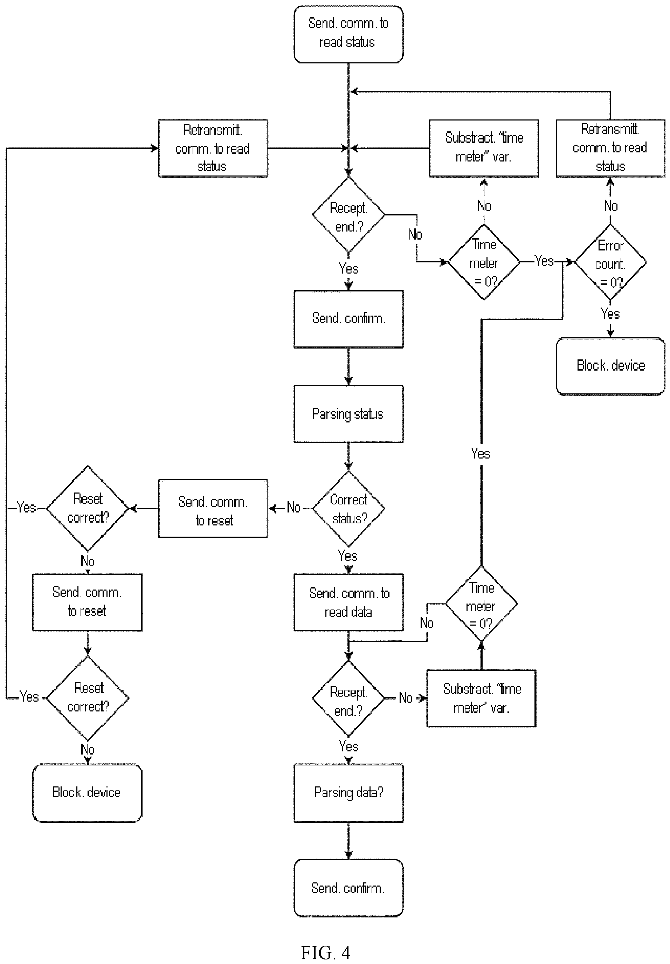

Fig. 4 shows a block diagram illustrating an embodiment of the method of sending the status and data frame. In the first blocks, the steps relating to the verification of the status of the power module are presented, as illustrated in points a1) - a6) of the second embodiment, then the blocks relating to the transmission of data are presented, as illustrated in points a) - g) of the second embodiment.

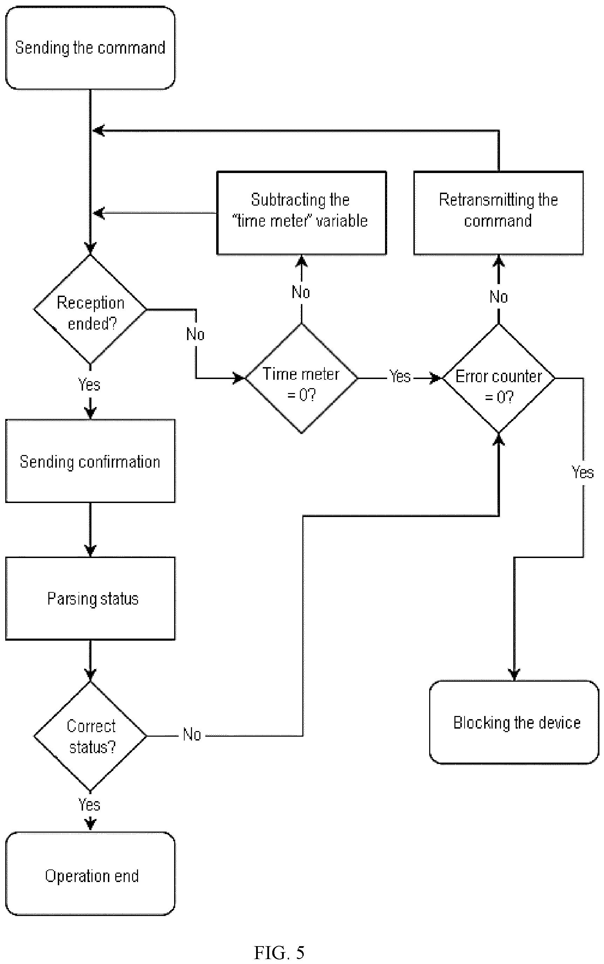

Fig. 6 shows a block diagram illustrating an embodiment of the method of sending a command, for example, a command to stop charging. It is obvious to a person skilled in the art that the same diagram also applies to other commands, for example, to the command to reset the power module 1. The command 101 to stop charging is transmitted immediately after the currently transmitted communication frame is interrupted and must therefore comprise an appropriate structure (Fig. 5), which will make it possible for the command to be recognised quickly by the power module 1; moreover, the command must be much shorter so that it can be quickly received and processed by the power module 1, which has a significant impact on the safe use of the device.

Fig. 5 shows a diagram of command fields, for example, of a command to stop charging. The fields in the diagram are: G1 - preamble to the command to stop charging, G2 - designation of the type of command (for example, the command to stop charging), G3 - register (identification) number, G4 - checksum, H5 - operation result field (transmitted by the power module 1, cf. Fig. 7), 16 - confirmation that the result of the operation has been received, as transmitted by the communication module 2.

## Claims

1. A charging cord, in particular for charging an energy storage of electric vehicles, comprising energy supply wires (3), at least one communication wire (4), a charging plug (6), an energy supply plug (5), and a control system comprising a communication module (2) and a power module (1), **characterised in that**
the communication module (2) is arranged in a housing (19) of the charging plug (6), the charging plug (6) comprising energy supply contacts (7) and communication contacts (8), and
the power module (1) is arranged in a housing (15) of the energy supply plug (5), the energy supply plug (5) comprising energy supply contacts (10), wherein
the communication module (2) is connected to the communication contacts (8) in the charging plug (6) and via the communication wire (4) to the power module (1),
the power module (1) is further connected to the energy supply contacts (10) in the energy supply plug (5), and via the energy supply wires (3) to the contacts (7) in the charging plug (6), wherein the power module (1) also comprises energy supply circuits (11) for delivering power to the charging, the energy supply circuits (11) comprising keys to open or close the charging current path of the energy storage.

2. The charging cord according to claim 1, **characterised in that** each of the communication module (2) and the power module (1) comprises at least one communication system to which the communication wire (4) is connected and each of the communication systems comprises input and output circuits, wherein preferably, the input and output circuits of the communication systems are made in an open-drain type system, wherein preferably, the communication system in the communication module (2) or in the power module (1) comprises Schmitt gates in the input circuits, wherein preferably, the high state voltage of the communication system is from 10 to 12 V and also preferably, the change of the state of the communication system from low state to high state is not faster than 10 µs.

3. The charging cord according to any one of claims 1 - 2, **characterised in that** the communication wire (4) is at least a single-core wire and one of the conductors of the at least a single-core communication wire (4) is an auxiliary energy supply wire for delivering auxiliary energy supply from the power module (1) to the communication module (2), wherein preferably, the return wire for the auxiliary energy supply circuit or the communication circuit is at least one of the energy supply wires (3), preferably, the power module (1) comprises an auxiliary energy supply system connected via the auxiliary energy supply wire to the communication module (2) for delivering auxiliary energy supply.

4. The charging cord according to any one of claims 1 - 3, **characterised in that** the communication module (2) comprises a communication microcontroller that comprises a waiting time meter and the power module (1) comprises a control microcontroller.

5. The charging cord according to any one of claims 1-4, **characterised in that** the power module (1) comprises measuring circuits for reading, for each energy supply wire (3), at least one of: energy supply current, energy supply voltage, temperature, leakage current.

6. The charging cord according to any one of claims 1-5, **characterised in that** at least one control button is arranged in the housing (19) of the charging plug (6) and preferably, a display is arranged in the housing (19) of the charging plug (6).

7. The charging cord according to any one of claims 1-6, **characterised in that** the communication module (2) comprises a wireless communication system for communication with the user.

8. A method of communication between the power module and the communication module of the charging cord according to claims 1 - 7, **characterised in that** it comprises periodically
a) transmitting, by the communication module (2) to the power module (1) via the communication wire (4), an instruction to send data within a communication frame (100),
b) receiving, by the power module (1), the communication frame (100) with an instruction to send data,
c) transmitting, by the power module (1), within a specified time window in the communication frame (100), a response that comprises data (E11-E28) via the communication wire,
d) receiving data (E11-E28), by the communication module (2), from the power module (1),
e) decoding data (E11-E28) by the communication module (2),
f) confirming, by the communication module (2), that the data from the power module (1) have been received correctly by means of confirmation (F29), and in the absence of confirmation (F29),
g) retransmitting data (E11-E28), by the power module (1), within a subsequent time window in a subsequent communication frame (100).

9. The method of communication according to claim 8, **characterised in that** the communication frame (100) is renewed with a period of 200 ms.

10. The method of communication according to claim 8 or 9, **characterised in that** after step d), if no data are sent from the power module (1) to the communication module (2) within a predefined time, the communication error counter is reduced, said counter being initialised with a predefined value of permissible detected transmission errors at system start-up, wherein if the communication error counter is equal to 0, communication with the energy storage being loaded is interrupted by the communication module (2) and an error message is signalled, otherwise, if the error counter is greater than 0, it is returned to the first step of transmitting the communication frame.

11. The method of communication according to any one of claims 8 - 10, **characterised in that** the stoppage of device operation in the charging mode is communicated by the communication module (2) with the command (101) to stop charging, wherein if any communication frame (100) is sent at that time, it is immediately interrupted and the command (101) to stop charging is transmitted, said command being at least five times shorter than the communication frame (100).

12. The method of communication according to any one of claims 8 - 11, **characterised in that** the command to stop charging, as received by the power module (1), causes the energy supply circuits to open immediately and preferably, the power module (1) opens the energy supply circuits when it does not detect the communication frame (100).

13. The method of communication according to any one of claims 8 - 12, **characterised in that** the communication frame (100) comprises a checksum (A4, D10).

14. The method of communication according to any one of claims 8 - 13, **characterised in that** the communication module (2) and the power module (1) detect each other's presence and correct operation by performing, before step a) and within each communication frame (100), the steps below:
a1) transmitting, by the communication module (2), an instruction (102) to read the status of the power module (1),
a2) within the time window in each communication frame (100), transmitting, by the power module (1), a response (B5) with information about the status of the power module (1),
a3) if the response (B5) with information about the status of the power module (1) has been received, transmitting a confirmation (C6) that the status has been received, or otherwise reducing the status waiting time meter, wherein in the event the time for receiving the response with information about the status from the power module (1) is exceeded, i.e. when the status waiting time meter is equal to 0, the communication error counter value is reduced, wherein the communication error counter is initialised with a predefined number of permissible detected transmission errors, when the error counter is greater than zero, it is returned to step a1), and when the error counter is equal to 0, the communication with the energy storage being loaded is interrupted by the communication module (2) and the error message is signalled,
a4) decoding information about the status of the power module (1),
a5) resetting the power module (1) by a reset command (104) sent by the communication module (2), in the event of receiving an incorrect status or of no response within a given time window, wherein the latest state of the waiting time is defined by the waiting time meter, and
a6) if the communication with the power module (1) is not restored, a command (101) to stop charging is transmitted and the communication with the device being charged is blocked by the communication contacts of the charging plug (6),
at the same time, the power module (1) is protected by a monitoring function that blocks the power module (1) and does not allow the energy supply circuits to be switched on in the absence of communication with the communication module (2).

15. A computer program product executed by the control system comprising the communication module 2 and the power module 1 of the charging cord according to claims 1-13, **characterised in that** it performs the steps of the method specified in claims 8-14.
